(19) Europäisches Patentamt / European Patent Office / Office européen des brevets

(11) **EP 1 699 151 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(51) Int Cl.:
*H04B 17/00* (2006.01)   *H04Q 7/38* (2006.01)

(21) Anmeldenummer: **06003728.0**

(22) Anmeldetag: **23.02.2006**

(54) **Verfahren zur Zuordnung von Signalabschnitten**

Method for classifying signal segments

Procédé pour classer des segments de signal

(84) Benannte Vertragsstaaten:
**DE GB**

(30) Priorität: **03.03.2005 DE 102005009799**

(43) Veröffentlichungstag der Anmeldung:
**06.09.2006 Patentblatt 2006/36**

(73) Patentinhaber: **Rohde & Schwarz GmbH & Co. KG 81671 München (DE)**

(72) Erfinder:
- **Kühne, Jens**
  **85614 Kirchseeon (DE)**
- **Weth, Stefan**
  **81539 München (DE)**

(74) Vertreter: **Körfer, Thomas et al**
**Mitscherlich & Partner**
**Patent- und Rechtsanwälte**
**Sonnenstrasse 33**
**80331 München (DE)**

(56) Entgegenhaltungen:
- **AHLEMANN P ET AL: "An automated monitoring system for the HF band" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001, IEEE MILITARY COMMUNICATIONS CONFERENCE, NEW YORK, NY : IEEE, US, Bd. VOL. 1 OF 2, 28. Oktober 2001 (2001-10-28), Seiten 139-142, XP010578995 ISBN: 0-7803-7225-5**
- **FEYH G ET AL: "HF-SIGNAL SURVEILLANCE: SIGNAL DETECTION, CLASSIFICATION AND PARAMETER ESTIMATION (U)" PROCEEDINGS OF THE MILITARY COMMUNICATIONS CONFERENCE (MILCOM). LONG BRANCH, NJ., OCT. 2 - 5, 1994, NEW YORK, IEEE, US, Bd. VOL. 3, 2. Oktober 1994 (1994-10-02), Seiten 755-759, XP000505972 ISBN: 0-7803-1829-3**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 699 151 B1

**Beschreibung**

Die Erfindung betrifft ein Verfahren zur Zuordnung von Signalabschnitten einer Signalgesamtheit zu einem Emitter.

Bei modernen Funkübertragungssystemen werden häufig sogenannte Hopping-Verfahren eingesetzt. Dabei wird ein Funksignal in mehrere Signalabschnitte zerlegt, wobei nach einem festgelegten pseudorandom Schema die einzelnen Signalabschnitte auf unterschiedlichen Trägerfrequenzen gesendet werden. Üblicherweise senden mehrere Emitter gleichzeitig in einem bestimmten Frequenzbereich und nutzen dabei eine selbe Gruppe von Trägerfrequenzen. Bei der Analyse ergibt sich daher das Problem, dass sich die einzelnen Signalabschnitte verschiedener Funksignale und somit verschiedener Emitter zu einer Signalgesamtheit überlagern. Zur Analyse einzelner Funksignale muss daher eine Zuordnung der einzelnen Signalabschnitte zu ihrem jeweiligen Emitter erfolgen. Insbesondere dann, wenn das zeitliche Schema der unterschiedlichen Funksignale der einzelnen Emitter ähnlich ist, also zum Beispiel die Dauer der einzelnen Signalabschnitte sowie die Hopprate übereinstimmen, ist eine Unterscheidung der einzelnen Signalabschnitte hinsichtlich ihres jeweiligen Senders schwierig.

Der Erfindung liegt die Aufgabe zugrunde, ein Verfahren zu schaffen, mit dem eine einfache Zuordnung von Signalabschnitten einer Funksignalgesamtheit zu dem jeweiligen Emitter möglich ist, sowie ein entsprechendes Computerprogramm und Computerprogramm-Produkt anzugeben.

Die Aufgabe wird durch das erfindungsgemäße Verfahren nach Anspruch 1 gelöst. Die Ansprüche 9 und 10 betreffen ein entsprechendes Computerprogramm, während Anspruch 11 ein entsprechendes Computerprogramm-Produkt betrifft.

Bei dem erfindungsgemäßen Verfahren wird zur Zuordnung von Signalabschnitten einer Signalgesamtheit zu jeweils einem Emitter zunächst die Signalgesamtheit empfangen. Die in der Signalgesamtheit enthaltenen einzelnen Signalabschnitte werden ermittelt. Es wird eine für alle ermittelten Signalabschnitte gemeinsame absolute Zeitskala festgelegt. Auf dieser absoluten Zeitskala werden die jeweiligen Startzeiten der einzelnen Signalabschnitte ermittelt. Zusätzlich zu diesen Startzeiten wird ein Zeitraster festgelegt und dessen Zeitrasterpunkte auf der absoluten Zeitskala bestimmt.

Für die einzelnen Signalabschnitte wird eine relative zeitliche Lage ihrer jeweiligen Startzeit in Bezug zu jeweils einem korrespondierenden Zeitrasterpunkt ermittelt. Die relativen zeitlichen Lagen der Startzeitpunkte aller Signalabschnitte, die zu einem Funksignal und damit zu einem Emitter gehören, folgen einer bestimmten Systematik. Daher erlaubt die Bestimmung der relativen zeitlichen Lage jedes Startzeitpunkts und die Zuordnung dieses Signalabschnitts zu einem bestimmten Emitter und damit zu einem bestimmten Funksignal.

Die Unteransprüche betreffen vorteilhafte Weiterbildungen des erfindungsgemäßen Verfahrens.

Insbesondere ist es vorteilhaft, aufgrund der unterschiedlichen relativen zeitlichen Lagen von Signalabschnitten eines ersten Funksignals und von Signalabschnitten eines zweiten Funksignals deren Abstand zueinander zu ermitteln. Sind sowohl die Emitter als auch die Empfänger ortsfest, so sind die relativen zeitlichen Lagen der Startzeiten eines Funksignals bezüglich der korrespondierenden Zeitrasterpunkte konstant, sofern das entsprechende Funksignal dem vorgegebenen Zeitraster folgt. Aus dem Abstand der relativen zeitlichen Lagen der Startzeiten der Signalabschnitte eines Funksignals von den relativen zeitlichen Lagen der Startzeitpunkte eines anderen Funksignals kann daher ein unterschiedlicher radialer Abstand der jeweiligen Emitter zu dem Empfänger und damit der Emitter zueinander ermittelt werden.

Ein weiterer Vorteil ist es, dass aus einer Änderung der relativen zeitlichen Lagen der Startzeitpunkte von Signalabschnitten eines Funksignals eine radiale Richtungskomponente einer Bewegung des entsprechenden Emitters ermittelt werden kann. Damit lässt sich in einfacher Weise bestimmen, ob zum Beispiel der Emitter in einer mobilen Einrichtung oder ortsfest betrieben wird.

In der Zeichnung ist ein bevorzugtes Ausführungsbeispiel des erfindungsgemäßen Verfahrens dargestellt und wird in der nachfolgenden Beschreibung näher erläutert. Es zeigen:

Fig. 1 eine schematische Darstellung von mehreren Emittern und einem das erfindungsgemäße Verfahren durchführenden Empfänger;

Fig. 2 ein Blockschaltbild zur Ermittlung von einzelnen Signalabschnitten einer empfangenen Signalgesamtheit;

Fig. 3 ein Zeitschema für drei Funksignale dreier unterschiedlicher Emitter und

Fig. 4 eine graphische Darstellung der relativen zeitlichen Lagen der Startzeiten von Signalabschnitten verschiedener Funksignale.

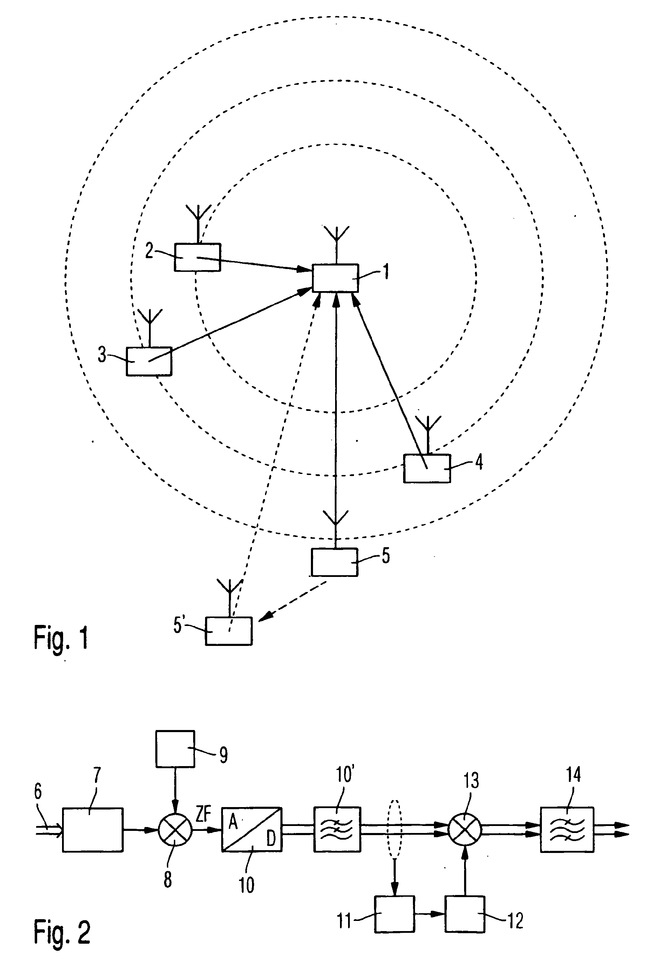

Die Fig. 1 zeigt in stark vereinfachter Darstellung die Anordnung mehrerer Emitter sowie eines Empfängers zur Durchführung des erfindungsgemäßen Verfahrens. Um einen Empfänger 1 herum sind mehrere Emitter angeordnet. Ein erster Emitter 2 weist dabei einen geringeren Abstand von dem Empfänger 1 auf als der zweite Emitter 3 und der dritte Emitter 4. Der dritte Emitter 4 unterscheidet sich von dem zweiten Emitter 3 hinsichtlich seines Abstandes nicht. Eine Unterscheidung ist lediglich durch die unterschiedliche Richtung in der sich die beiden Emitter 3 und 4 relativ zum Empfänger 1 befinden möglich.

Während die Emitter 2 bis 4 bezüglich des Empfängers 1 ortsfest sind, bewegt sich ein vierter Emitter 5 mit einer von Null verschiedenen Geschwindigkeit relativ zu dem Empfänger 1. Dabei ändert sich nicht nur die Richtung in der ein Signal des vierten Emitters 5 zu dem Empfänger 1 hin abgestrahlt wird, sondern insbesondere auch der radiale Abstand des vierten Emitters 5. In der Fig. 1 ist es dargestellt, dass sich der vierte Emitter 5 in Richtung einer neuen Position 5' bewegt. Die Veränderung des radialen Abstands zu dem Empfänger 1 verursacht eine Änderung der Laufzeit des Funksignals. Aufeinanderfolgende Signalabschnitte weisen damit unterschiedliche Laufzeiten zu dem Empfänger 1 hin auf. Diese Information kann, wie es später noch ausführlich erläutert wird, genutzt werden, um eine radiale Geschwindigkeitskomponente des Emitters 5 zu bestimmen.

Der Einfachheit halber sei zunächst angenommen, dass sowohl der Empfänger 1 wie auch die Emitter 2 bis 4 ortsfest sind.

Die von den Emittern 2 bis 5 ausgesendeten Funksignale sind jeweils in einzelne Signalabschnitte unterteilt. Die einzelnen Signalabschnitte werden von den Emittern 2 bis 5 auf unterschiedlichen Trägerfrequenzen gesendet. Bei solchen sogenannten Frequenz-Hopping-Verfahren werden dabei die einzelnen Signalabschnitte, die zu einem Funksignal gehören, auf unterschiedlichen Frequenzen gesendet. Die Abfolge der Frequenzsprünge folgt einem vorgegebenen Schema. Jeder Emitter besitzt ein eigenes Schema das die Reihenfolge der verwendeten Hoppfrequenzen festlegt.

Die von den Emittern 2 bis 5 ausgesendeten Signalabschnitte kommen zeitlich überlagert bei dem Empfänger 1 an. Mit Hilfe des erfindungsgemäßen Verfahrens werden die als eine so entstehende Signalgesamtheit bei dem Empfänger 1 ankommenden sich überlagernden Signalabschnitte voneinander getrennt und den einzelnen Emittern 2 bis 5 zugeordnet. Hierzu wird der unterschiedliche Abstand der Emitter 2 bis 5 von dem Empfänger 1 und die daraus resultierende unterschiedliche Laufzeit der Signalabschnitte genutzt.

In der Fig. 2 ist ein Blockschaltbild dargestellt, anhand dessen das der Auswertung der Signalgesamtheit zugrunde liegende Verfahren erläutert werden soll. Wie es bereits bezüglich der Fig. 1 erläutert wurde, bilden die einzelnen Signalabschnitte verschiedener Funksignale, die von unterschiedlichen Emittern stammen, eine Signalgesamtheit 6. Die Signalgesamtheit 6 wird von einer Empfangsantenne 7 empfangen. Das empfangene Signal wird in einem Mischer 8 unter Berücksichtigung einer Frequenz eines ersten lokalen Oszillators 9 auf eine Zwischenfrequenz ZF gemischt. Das Zwischenfrequenzsignal wird an einen Analog/Digital-Wandler 10 weitergeleitet. Die Abtastrate des Analog/Digital-Wandlers 10 muss dem Nyquist-Theorem entsprechend mindestens dem zweifachen der höchsten zu analysierenden Bandbreite entsprechen. Das unterabgetastete Signal wird ausschließlich durch einen Tiefpass 10' gefiltert.

Aus den in digitaler Form vorliegenden Daten wird ein Spektrogramm berechnet. Hierzu wird eine diskrete Fouriertransformation durchgeführt.

Als Ergebnis ergibt sich ein Spektrogramm 11 mit einer Bandbreite B und einer Länge der Zeit T. Damit sind Signalabschnitte, die zu einer Erhöhung der Sendeleistung bei einer bestimmten Frequenz $f_i$ zu einem bestimmten Zeitpunkt $t_i$ führen, detektierbar. Für die in dem Spektrogramm ermittelten Signalabschnitte wird jeweils eine Mittenfrequenz $f_{i0}$ bestimmt. Zur weiteren Analyse wird die bestimmte Mittenfrequenz $f_{i0}$ verwendet, um einen zweiten lokalen Oszillator 12 so abzustimmen, dass mit einem zweiten Mischer 13 der entsprechende Signalabschnitt aus einer zwischengespeicherten Version des Zeitsignals schmalbandig ins Basisband gemischt wird. Anschließend erfolgt eine exakte Analyse der einzelnen Signalabschnitte. Bei dieser exakten Analyse der einzelnen Signalabschnitte lässt sich unter anderem die jeweilige Startzeit eines Signalabschnitts exakt bestimmen. Vor der exakten Analyse der schmalbandigen Signalabschnitte werden die Signale durch ein digitales Bandpassfilter 14 gefiltert und ggf. mit einem Dezimator 15 auf eine niedrigere Abtastrate konvertiert.

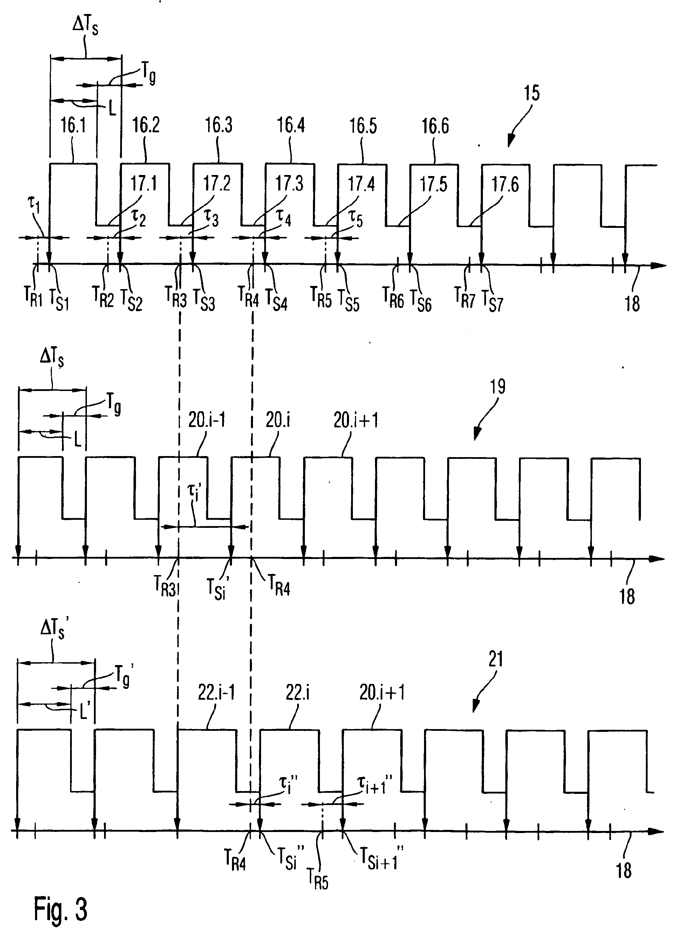

In der Fig. 3 ist der zeitliche Verlauf eines ersten Funksignals 15 dargestellt. Das erste Funksignal 15 besteht aus aufeinander folgenden Signalabschnitten 16.1, 16.2, 16.3,... in denen der Emitter die Signalabschnitte 16.i mit einer bestimmten Sendeleistung aussendet. Die einzelnen Signalabschnitte 16.1, 16.2, 16.3,... sind durch Abschnitte 17.1, 17.2, 17.3,... voneinander getrennt, in denen die Sendeleistung stark absinkt und in denen keine Information übertragen wird. Während dieser zeitlichen Abschnitte 17.1, 17.2, 17.3,... ohne Sendeleistung wird jeweils eine neue Trägerfrequenz seitens des Emitters eingestellt. Die einzelnen Signalabschnitte 16.1, 16.2, 16.3,... werden daher auf unterschiedlichen Trägerfrequenzen übertragen. Das Schema, nach dem die Trägerfrequenzen wechseln, wird durch das jeweils verwendete Hopping-Verfahren festgelegt.

Für die einzelnen Signalabschnitte 16.1, 16.2, 16.3,... wird jeweils eine Startzeit $T_{S1}$, $T_{S2}$, $T_{S3}$, usw. ermittelt. Hierzu wird zunächst eine absolute Zeitskala 18 festgelegt. Die Auswahl der absoluten Zeitskala ist beliebig. Im einfachsten Fall stimmen der Nullpunkt der Zeitskala und der Beginn der Analyse überein. Zusätzlich zu diesen Startzeiten $T_{Si}$ werden auf der absoluten Zeitskala 18 Zeitrasterpunkte $T_{R1}$, $T_{R2}$, $T_{R3}$, ... bestimmt. Die Zeitrasterpunkte $T_{Ri}$ bilden das zeitliche Schema des Funksignals 15 auf der absoluten Zeitskala 18 ab.

Der Abstand zweier benachbarter Zeitrasterpunkte $T_{Ri}$ und $T_{Ri+1}$ ist definiert als der zeitliche Abstand der Startzeiten $T_{Si}$ und $T_{si+1}$ zweier aufeinander folgender Signalabschnitte 16.i und 16.i+1, unter der Voraussetzung, dass sowohl der Emitter als auch der Empfänger ortsfest sind.

Das erfindungsgemäße Verfahren wird vorzugsweise eingesetzt, wenn eine Länge L der Signalabschnitte 16.i bekannt ist. Die zuzuordnenden Signalabschnitte werden dann beispielsweise über ihre zeitliche Länge erkannt. Die Länge L wird zur Erkennung der Signalabschnitte mit einer Toleranz versehen, um sicher alle Signalabschnitte mit einer theoretischen zeitlichen Länge von L zu erfassen. Der Abstand der Zeitrasterpunkte $T_{Ri}$ wird dann ermittelt, indem zunächst aus dem ersten Funksignal 15 die Länge des Abschnitts 17.i ohne Sendeleistung ermittelt wird. Diese sogenannte "guard-period" $T_g$ legt zusammen mit der zeitlichen Länge L der Signalabschnitte 16.i das Zeitraster fest. Der Abstand der Zeitrasterpunkte $T_{Ri}$ entspricht somit der Differenz der Startzeitpunkte zweier aufeinander folgender Signalabschnitte 16.i und 16.i+1.

Die absolute Lage der Zeitrasterpunkte $T_{Ri}$ auf der absoluten Zeitskala 18 ist beliebig. Der Einfachheit halber kann zum Beispiel die absolute Zeitskala 18 so gewählt werden, dass der erste Zeitrasterpunkt $T_{R1}$ und der Nullpunkt der absoluten Zeitskala 18 zusammenfallen. Zur Zuordnung der einzelnen Funksignalabschnitte 16.i des ersten Funksignals 15 zu einem bestimmten Emitter wird nun die Differenz zwischen den Startzeiten $T_{si}$ der einzelnen Signalabschnitte 16.i und dem jeweils vorangegangenen Zeitrasterpunkt $T_{Ri}$ ermittelt. Damit wird für jeden Signalabschnitt 16.i eine relative zeitliche Lage $\tau_i$ bezüglich des Zeitrasterpunktes $T_{Ri}$ bestimmt.

Wie es bereits erläutert wurde, ist für das Funksignal 15 beispielhaft davon ausgegangen worden, dass sowohl der Emitter, welcher das erste Funksignal 15 sendet, als auch der Empfänger 1 ortsfest sind. Bei einer Übereinstimmung des Zeitrasters des ersten Funksignals 15 mit dem auf der absoluten Zeitskala 18 abgebildeten Zeitrasterpunkten $T_{Ri}$ ist dann die relative zeitliche Lage $\tau_i$ für alle Signalabschnitte 16.i konstant.

Die Berechnung der relativen zeitlichen Lagen $\tau_i$ erfolgt nach der Formel:

$$\tau_i = T_{si} \bmod (T_g + L)$$

Während das erste Funksignal 15 zum Beispiel einem Funksignal des ersten Emitters 2 aus der Fig. 1 entspricht, ist in der Fig. 3 zusätzlich ein zweites Funksignal 19 dargestellt, das zum Beispiel durch den zweiten Emitter 3 gesendet wird. Sowohl der Emitter 2 als auch der zweite Emitter 3 weisen einen über die Zeit konstanten, jedoch unterschiedlichen Abstand zu dem Empfänger 1 auf. Die Laufzeiten der einzelnen Signalabschnitte 16.i des ersten Funksignals 15 sowie die Laufzeiten der Signalabschnitte 20.i des zweiten Funksignals 19 unterscheiden sich daher. Das zweite Funksignal 19 folgt dem selben Zeitraster wie das erste Funksignal 15 des ersten Emitters 2. Das heißt, dass die einzelnen Signalabschnitte 20.i des zweiten Funksignals 19 eine identische zeitliche Länge L aufweisen wie die Signalabschnitte 16.i des ersten Funksignals 15. Auch die guard-period $T_g$ des zweiten Funksignals 19 entspricht in seiner Länge der guard-period $T_g$ des ersten Funksignals 15. Die Startzeiten $T_{si}'$ zweier aufeinander folgender Signalabschnitte 20.i und 20.i+1 des zweiten Funksignals 19 weisen daher ebenfalls eine zeitliche Differenz von $\Delta T_s$ auf, die dem zeitlichen Abstand zweier aufeinander folgender Zeitrasterpunkte $T_{Ri}$ und $T_{Ri+1}$ entspricht. Zur Auswertung wird die identische absolute Zeitskala 18 verwendet, wie sie auch schon zur Analyse des Funksignals 15 verwendet wird. Damit unterscheidet sich die relative zeitliche Lage $\tau_i'$ bezüglich der Zeitrasterpunkte $T_{Ri}$ aufgrund der geänderten Laufzeit von der relativen zeitlichen Lage $\tau_i$ der Startzeiten $T_{Si}$ des ersten Funksignals 15.

In der Fig. 3 ist dies der besseren Übersichtlichkeit wegen lediglich für die Startzeit $T_{si}'$ dargestellt. Die Lage des vorangegangenen Zeitrasterpunktes $T_{R3}$ ist gegenüber der Auswertung des ersten Funksignals 15 unverändert auf der absoluten Zeitskala 18. Aufgrund der längeren Laufzeit des zweiten Funksignals 19 gegenüber dem ersten Funksignal 15 zu dem Empfänger 1 hin, ist jedoch die relative zeitliche Lage $\tau_i'$ der Startzeit $T_{si}'$ des Signalabschnitts 20.i verändert. Da sich auch der zweite Emitter 3 relativ zu dem Empfänger 1 in Ruhe befindet, ist wiederum für alle Startzeiten $T_{si}'$ der Signalabschnitte 20.i des zweiten Funksignals 19 die relative zeitliche Lage $\tau_i'$ der Startzeiten $T_{si}'$ der Signalabschnitte 20.i konstant, unterscheidet sich jedoch von den relativen zeitlichen Lagen $\tau_i$ der Signalabschnitte 16.i des ersten Funksignals 15.

Damit können sämtliche Signalabschnitte 16.i und 20.i des Funksignals 15 bzw. des zweiten Funksignals 19 aufgrund der relativen zeitlichen Lagen $\tau_i$ bzw. $\tau_i'$ eindeutig einem bestimmten Emitter zugeordnet werden.

In der Fig. 3 ist weiterhin ein drittes Funksignal 21 gezeigt, welches von einem sich mit einer radialen Geschwindigkeitskomponente relativ zu dem Empfänger 1 bewegenden vierten Emitter 5 zeigt. Aufgrund dieser radialen Geschwindigkeitskomponente ändert sich die Laufzeit eines jeden Signalabschnitts 22.i des dritten Funksignals 21. Das führt dazu, dass trotz eines an sich identischen Zeitrasters, in dem der vierte Emitter 5 die Funksignale aussendet, die einzelnen Signalabschnitte 22.i eine sich ändernde Laufzeit aufweisen und auch eine geänderte Signallänge L' aufweisen. Entsprechend ändert sich auch die Länge des Abschnitts ohne Sendeleistung, so dass die guard-period $T_g'$ des dritten Funksignals 21 von der guard-period $T_g$ verschieden ist.

Der sich so ergebende zeitliche Abstand $\Delta T_s'$ zweier aufeinander folgender Startzeiten $T_{Si}''$ und $T_{Si+1}''$ von Signalabschnitten 22.i und 22.i+1 des dritten Funksignals 21 weicht daher trotz der Identität des verwendeten Zeitrasters von dem Abstand zweier aufeinander folgender Zeitrasterpunkte $T_{Ri}$ und $T_{Ri+1}$ auf der absoluten Zeitskala 18 ab. Dies führt dazu, dass sich für jeden Signalabschnitt 20.i die relative zeitliche Lage $\tau_i''$ relativ zu den korrespondierenden Zeitrasterpunkten $T_{Ri}$ verändert. In der Fig. 3 ist dies für die Signalabschnitte 22.i und 22.i+1 dargestellt. Die Startzeit $T_{Si}''$ hat eine relative zeitliche Lage $\tau_i''$ bezüglich des Zeitrasterpunktes $T_{R4}$.

Demgegenüber ist die relative zeitliche Lage $\tau_{i+1}''$ der Startzeit $T_{Si+1}''$ des Signalabschnitts 22.i+1 gegenüber dem Zeitrasterpunkt $T_{R5}$ größer. Bewegt sich der Emitter des dritten Funksignals 21 mit einer konstanten radialen Geschwindigkeit bezüglich des Empfängers 1, so ist diese Zunahme der relativen zeitlichen Lage $\tau_i''$ für aufeinander folgende Startzeiten $T_{Si}''$ konstant.

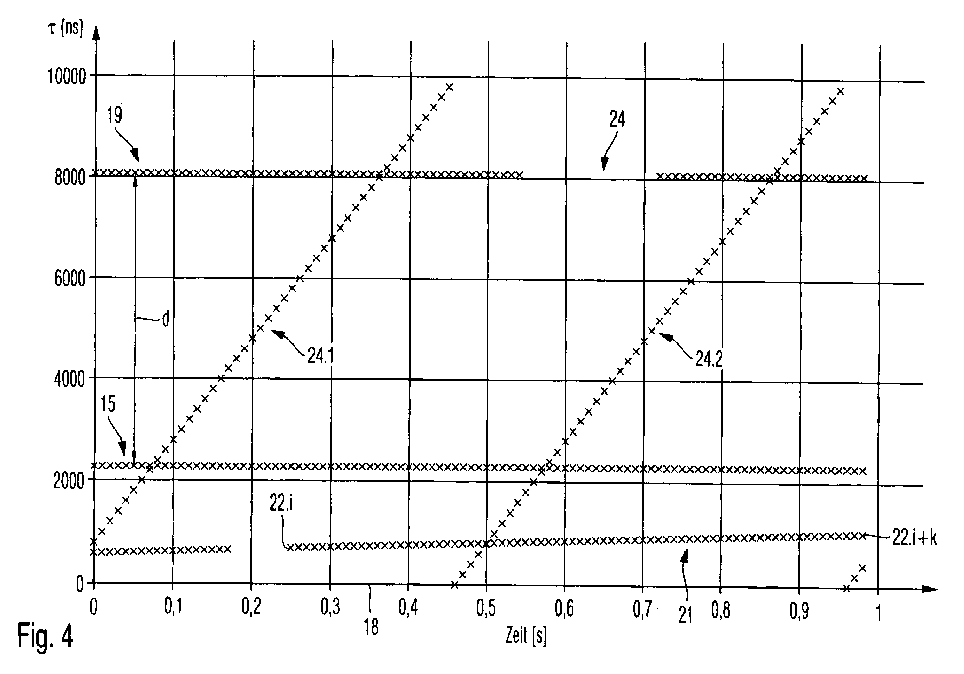

In der Fig. 4 ist ein Diagramm dargestellt, in welchem die relativen zeitlichen Lagen $\tau_i$, $\tau_i'$ und $\tau_i''$ der Funksignale 15, 19, 21 als Funktion ihrer absoluten Startzeiten $T_{Si}$, $T_{Si'}$ und $T_{Si}''$ aufgetragen ist. Die absolute Zeitskala 18 bildet die x-Achse des Diagramms. Entlang der y-Achse werden die relativen zeitlichen Lagen $\tau_i$, $\tau_i'$ und $\tau_i''$ der Startzeiten $T_{Si}$, $T_{Si'}$ und $T_{Si}''$ der einzelnen Signalabschnitte 16.i, 20.i und 22.i der Funksignale 15, 19 und 21 aufgetragen. Da die relativen zeitlichen Lagen $\tau_i$ der Signalabschnitte 16.i des Funksignals 15 bezüglich der entsprechenden Zeitrasterpunkte $T_{Ri}$ konstant sind, liegen sämtliche relativen zeitlichen Lagen $\tau_i$ des ersten Funksignals 15 auf einer Geraden, die parallel zur x-Achse verläuft.

Da auch für den ortsfesten Emitter 3 des zweiten Funksignals 19 die relativen zeitlichen Lagen $\tau_i'$ konstant, jedoch verschieden von den relativen zeitlichen Lagen $\tau_i$ sind, ergibt sich für das zweite Funksignal 19 eine weitere Gerade, die einen bestimmten Abstand d von der dem ersten Funksignal 15 entsprechenden ersten Gerade aufweist. Der Abstand d der beiden Geraden des ersten Funksignals 15 und des zweiten Funksignals 19 entspricht der Laufzeitdifferenz, den die Signalabschnitte 16.i des Emitters 2 von den Signalabschnitten 20.i des Emitters 3 aufweisen, sofern die in den Emittern 2, 3 verwendeten Taktgeber synchron sind. Da sich die Signale von dem Emitter 2 bzw. dem Emitter 3 mit Lichtgeschwindigkeit ausbreiten, kann dann aus dem Abstand d der beiden Geraden in dem Diagramm die unterschiedliche radiale Entfernung des Emitters 2 und des Emitters 3 von dem Empfänger 1 ermittelt werden. Die radiale Entfernung $\Delta r$ ergibt sich unter Berücksichtigung der Lichtgeschwindigkeit c nach der Gleichung $\Delta r=|(\tau_i-\tau_i')\bullet c|$. Für das zweite Funksignal 19 ist beispielhaft noch eine Sendepause 24 dargestellt.

In dem Diagramm sind weiterhin für das dritte Funksignal 21 jeweils die relativen zeitlichen Lagen $\tau_i''$ der Startzeiten $T_{Si}''$ der Signalabschnitte 22.i über der jeweiligen absoluten Startzeit $T_{Si}''$ aufgetragen. Es ist zu erkennen, dass sämtliche relativen zeitlichen Lagen $\tau_i''$ wiederum auf einer Geraden liegen, die jedoch im Unterschied zu den Geraden der Funksignale 15 und 19 nicht parallel zu der absoluten Zeitskala 18 verläuft. Dabei lässt sich aus der Steigung der Geraden die radiale Geschwindigkeitskomponente des Emitters bezüglich des Empfängers 1 ermitteln. Hierzu wird zunächst der Abstand des Emitters 5 beim Aussenden eines bestimmten Signalabschnitts 22.i sowie der Abstand beim Aussenden eines weiteren Signalabschnitts 22.i+k ermittelt. Die Ermittlung des unterschiedlichen radialen Abstands erfolgt nach der Formel $\Delta r=|(\tau_i''-\tau_{i+k}'')\bullet c|$. Aus der Diffe-

renz der relativen zeitlichen Lagen $\tau_{Si}''$ und $\tau_{i+k}''$ zweier Startzeiten $T_{Si}''$ und $T_{Si+k}''$ des dritten Funksignals 21 sowie der Differenz der absoluten Startzeiten $T_{Si}''$ und $T_{Si+k}''$ lässt sich damit die radiale Geschwindigkeitskomponente des vierten Emitters 5 bezüglich des Empfängers 1 nach der Formel:

$$V_r = \frac{\tau_i'' - \tau_{i+k}''}{T_{Si}'' - T_{Si+k}''} \bullet c$$

bestimmen.

Befindet sich in der empfangenen Signalgesamtheit 6 ein Funksignal, welches einem abweichenden Zeitraster folgt, so liegen dessen relative zeitliche Lagen der Startzeitpunkte seiner Signalabschnitte zwar ebenfalls auf weiteren Geraden 24.1, 24.2. Diese weisen allerdings eine Steigung auf, die nicht in Einklang zu bringen ist mit einer üblichen Geschwindigkeit in radialer Richtung. Überschreitet daher die Steigung der weiteren Geraden 24.1 und 24.2 einen bestimmten Wert, so kann aus der Darstellung gemäß Fig. 4 entnommen werden, dass es sich dabei um Funksignale eines anderen Zeitrasters handelt. Ist zusätzlich zu den bereits angegebenen Emittern 2, 3 und 5 der Fig. 1 ein dritter Emitter 4 aktiv, dessen radialer Abstand zu dem Empfänger 1 zum Beispiel identisch mit dem radialen Abstand des zweiten Emitters 3 ist, so können beispielsweise als zusätzliches Zuordnungskriterium die Sendeleistungen der einzelnen Emitter verwendet werden. Wegen des identischen radialen Abstandes der Emitter 3 und 4 zu dem Empfänger 1 unterscheiden sich die Laufzeiten der entsprechenden Funksignale zu dem Empfänger 1 hin nicht. Laufen zudem die jeweils der Aussendung der Funksignale zugrunde liegenden Taktgeber der Emitter 3 und 4 synchron, so sind die relativen zeitlichen Lagen der Startzeiten der Signalabschnitte beider Emitter 3, 4 identisch. Um solche identischen relativen zeitlichen Lagen voneinander unterscheiden zu können, ist es beispielsweise möglich, als weiteres Unterscheidungskriterium die Sendeleistung für die einzelnen Signalabschnitte des Funksignals des Emitters 3 und für die Signalabschnitte des Funksignals des Emitters 4 zu verwenden.

Eine alternative Möglichkeit, die Emitter 3 und 4 voneinander zu unterscheiden, liegt in der Unterscheidung der unterschiedlichen Peilrichtungen. Wird neben der relativen zeitlichen Lage $\tau_i$ als weiteres Kriterium die Peilrichtung verwendet, so ist eine Unterscheidung auch dann noch möglich, wenn die Sendeleistung der Emitter 3 und 4 übereinstimmt. Die Verwendung solcher zusätzlicher Kriterien ist auch dann vorteilhaft, wenn sich beispielsweise die Geraden des dritten Funksignals 21 sowie des Funksignals 15 aufgrund der Bewegung in radialer Richtung des Emitters 5 schneiden. Nah beieinander liegende relative zeitliche Lagen $\tau_i$ können so unterschieden werden.

Solche zusätzlichen Unterscheidungskriterien können in dem Diagramm der Fig. 4 entweder als Farbkodierung oder durch Ergänzung einer dritten Koordinatenachse berücksichtigt werden.

Der Einfachheit halber betreffen die vorstehenden Ausführungen einen Empfänger 1, der ortsfest ist. Das beschriebene Verfahren ist jedoch auch dann anwendbar, wenn sich der Empfänger 1 mit einer bekannten Geschwindigkeit fortbewegt. In einem solchen Fall unterscheidet sich das Diagramm der Fig. 4 dann darin, dass die relativen zeitlichen Lagen $\tau_i$ und $\tau_i$' auf Geraden liegen, welche nicht parallel zu der absoluten Zeitskala 18 angeordnet sind. Die bekannte Geschwindigkeit des Empfängers kann jedoch auch rechnerisch bereits berücksichtigt werden.

Die Erfindung ist nicht auf das dargestellte Ausführungsbeispiel beschränkt. Sämtliche beschriebenen oder gezeichneten Elemente sind im Rahmen der Erfindung beliebig kombinierbar.


**Patentansprüche**

1. Verfahren zur Zuordnung von Signalabschnitten (16.i, 20.i, 22.i) einer Signalgesamtheit (6) zu jeweils einem Emitter (2, 3, 4, 5) mit folgenden Verfahrensschritten:

    - Empfangen einer Signalgesamtheit (6),
    - Ermitteln von die Signalgesamtheit (6) bildenden Signalabschnitten (16.i, 20.i, 22.i),
    - Festlegen einer absoluten Zeitskala (18),
    - Ermitteln von Startzeiten ($T_{Si}$, $T_{Si}$', $T_{Si}$") der Signalabschnitte (16.i, 20.i, 22.i) auf der absoluten Zeitskala (18),
    - Festlegen von Zeitrasterpunkten ($T_{Ri}$) auf der absoluten Zeitskala (18),
    - Ermitteln von relativen zeitlichen Lagen ($\tau_i$, $\tau_i$', $\tau_i$") der Startzeiten ($T_{Si}$, $T_{Si}$', $T_{Si}$") der Signalabschnitte (16.i, 20.i, 22.i) zu jeweils einem korrespondierenden Zeitrasterpunkt ($T_{Ri}$) und
    - Zuordnen der Signalabschnitte (16.i, 20.i, 22.i) aufgrund ihrer relativen zeitlichen Lage ($\tau_i$, $\tau_i$', $\tau_i$") bezüglich der korrespondierenden Zeitrasterpunkte ($T_{Ri}$) zu einem Emitter (2, 3, 4, 5).

2. Verfahren nach Anspruch 1,
   **dadurch gekennzeichnet,**
   **dass** zur Zuordnung der Signalabschnitte (16.i, 20.i, 22.i) zu einem Emitter (2, 3, 4, 5) in einem Diagramm für jeden Signalabschnitt (16.i, 20.i, 22.i) seine relative zeitliche Lage ($\tau_i$, $\tau_i$', $\tau_i$') als Funktion seiner Startzeit ($T_{Si}$, $T_{Si}$', $T_{Si}$') dargestellt wird.

3. Verfahren nach Anspruch 1 oder 2,
   **dadurch gekennzeichnet,**
   **dass** zum Ermitteln der die Signalgesamtheit (6) bildenden Signalabschnitte (16.i, 20.i, 22.i) eine Signallänge (L) vorgegeben wird und diejenigen Signalabschnitte (16.i, 20.i, 22.i) ermittelt werden, deren zeitliche Länge der vorgegebenen Signallänge (L) entspricht.

4. Verfahren nach einem der Ansprüche 1 bis 3,
   **dadurch gekennzeichnet,**
   **dass** ein zwischen zwei aufeinanderfolgenden Signalabschnitten (16.i, 16.i+1) liegender Zeitabstand ($\Delta T_S$) ermittelt wird.

5. Verfahren nach einem der Ansprüche 1 bis 4,
   **dadurch gekennzeichnet,**
   **dass** aus einer Änderung der relativen zeitlichen Lagen ($\tau_i$") der Startzeiten ($T_{Si}$") von Signalabschnitten (22.i) eine Relativgeschwindigkeit eines Emitters (5) ermittelt wird.

6. Verfahren nach einem der Ansprüche 1 bis 5,
   **dadurch gekennzeichnet,**
   **dass** aus der Differenz der relativen zeitlichen Lagen ($\tau_i$, $\tau_i$') der Startzeitpunkte ($T_{Si}$, $T_{Si}$'') von Signalabschnitten (16.i, 20.i) unterschiedlicher Funksignale (15, 19) ein radialer Abstand ($\Delta r$) unterschiedlicher Emitter (2, 3) bestimmt wird.

7. Verfahren nach einem der Ansprüche 1 bis 6,
   **dadurch gekennzeichnet,**
   **dass** zusätzlich für jeden dargestellten Signalabschnitt (16.i, 20.i, 22.i) eine Signalleistung ermittelt wird und dargestellt wird.

8. Verfahren nach einem der Ansprüche 1 bis 7,
   **dadurch gekennzeichnet,**
   **dass** in einem Diagramm für jeden Signalabschnitt (16.i, 20.i, 22.i) seine relative zeitliche Lage ($\tau_i$, $\tau_i$', $\tau_i$") als Funktion der Startzeit ($T_{Si}$, $T_{Si}$', $T_{Si}$") dargestellt wird und dass zusätzlich für jeden dargestellten Signalabschnitt (16.i, 20.i, 22.i) eine Peilrichtung ermittelt und zusätzlich dargestellt wird.

9. Computerprogramm mit Programmcode-Mitteln, um alle Schritte gemäß einem der Ansprüche 1 bis 8 durchtuführen, wenn das Programm auf einem Computer oder einem digitalen Signalprozessor ausgeführt wird.

10. Computerprogramm nach Anspruch 9, wenn das Programm auf einem maschinenlesbaren Datenträger gespeichert ist.

11. Computerprogramm-Produkt nach Anspruch 9, wobei des Programmcode-Mitteln auf einem maschinenlesbaren Datenträger gespeichert ist, wenn das Programm auf einem Computer oder einem digitalen Signalprozessor ausgeführt wird.

**Claims**

1. Method for allocating signal portions (16.i, 20.i, 22.i) of a complete signal (6) respectively to an emitter (2, 3, 4, 5) comprising the following procedural stages:

   - reception of a complete signal (6),
   - determination of signal portions (16.i, 20.i, 22.i) forming the complete signal (6),
   - establishment of an absolute timescale (18),
   - determination of start times ($T_{Si}$, $T_{Si}'$, $T_{Si}''$) of the signal portions (16.i, 20.i, 22.i) on the absolute timescale (18),
   - establishment of time-raster points ($T_{Ri}$) on the absolute timescale (18),
   - determination of relative time positions ($\tau_i$, $\tau_i'$, $_i\tau''$) of the start times ($T_{Si}$, $T_{Si}'$, $T_{Si}''$) of the signal portions (16.i, 20.i, 22.i) respectively at one corresponding time-raster point ($T_{Ri}$) and
   - allocation of the signal portions (16.i, 20.i, 22.i) to an emitter (2, 3, 4, 5) on the basis of their relative time position ($\tau_i$, $\tau_i'$, $\tau_i''$) with reference to the corresponding time-raster points ($T_{Ri}$).

2. Method according to claim 1,
   **characterised in that**,
   in order to allocate the signal portions (16.i, 20.i, 22.i) to an emitter (2, 3, 4, 5), the relative time position ($\tau_i$, $\tau_i'$, $\tau_i''$) for each signal portion (16.i, 20.i, 22.i) is presented in the diagram as a function of its start time ($T_{Si}$, $T_{Si}'$, $T_{Si}''$).

3. Method according to claim 1 or 2,
   **characterised in that**
   a signal length (L) is specified in order to determine the signal portions (16.i, 20.i, 22.i) forming the complete signal (6), and those signal portions (16.i, 20.i,. 22.i), of which the signal length corresponds to the specified signal length (L), are determined.

4. Method according to any one of claims 1 to 3,
   **characterised in that**
   a time spacing ($\Delta T_S$) disposed between two successive signal portions (16.i, 16.1+1) is determined.

5. Method according to any one of claims 1 to 4,
   **characterised in that**
   a relative speed of an emitter (5) is determined from a change in the relative time positions ($\tau_i''$) of the start times ($T_{Si}''$) of signal portions (22.i).

6. Method according to any one of claims 1 to 5,
   **characterised in that**
   a radial spacing ($\Delta r$) of different emitters (2, 3) is determined from the difference between the relative time positions ($\tau_i$, $\tau_i'$) of the start times ($T_{si}$, $T_{si}''$) of signal portions (16.i, 20.i) of different radio signals (15, 19).

7. Method according to any one of claims 1 to 6,
   **characterised in that**
   a signal power for each signal portion (16.i, 20.i, 22.i) presented is additionally determined and displayed.

8. Method according to any one of claims 1 to 7,
   **characterised in that**
   the relative time position ($\tau_i$, $\tau_i'$, $\tau_i''$) for each signal portion (16.i, 20.i, 22.i) is presented in the diagram as a function of the start time ($T_{Si}$, $T_{Si}'$, $T_{Si}''$), and a direction of orientation for each signal portion (16.i, 20.i, 22.i) presented is additionally determined and displayed.

9. Computer program with program-code means for the implementation of all of the stages according to any one of claims 1 to 8, wherein the program is executed on a computer or a digital signal processor.

10. Computer program according to claim 9, when the program is stored on a machine-readable data medium.

11. Computer-software product according to claim 9, wherein the program-code means is stored on a machine-readable data medium when the program is executed on a computer or a digital signal processor.

**Revendications**

1. Procédé pour l'attribution de parties de signal (16.i, 20.i, 22.i) d'un ensemble de signal (6) à respectivement un émetteur (2, 3, 4, 5) comprenant les étapes de procédé suivantes :

   - réception d'un ensemble de signal (6),
   - détermination de parties de signal (16.i, 20.i, 22.i) formant l'ensemble de signal (6),
   - fixation d'une échelle de temps absolue (18),
   - détermination de temps de démarrage ($T_{si}$, $T_{si}'$, $T_{si}''$) des parties de signal (16.i, 20.i, 22.i) sur l'échelle de temps absolue (18),
   - fixation de points de trame de temps ($T_{RI}$) sur l'échelle de temps absolue (18),
   - détermination de positions relatives dans le temps ($\tau_i$, $\tau_i'$, $\tau_i''$) des temps de démarrage ($T_{si}$, $T_{si}'$, $T_{si}''$) des parties de signal (16.i, 20.i, 22.i) à respectivement un point de trame de temps ($T_{RI}$) correspondant et
   - attribution des parties de signal (16.i, 20.i, 22.i) sur la base de leur position relative dans le temps ($\tau_i$, $\tau_i'$, $\tau_i''$) par rapport aux points de trame de temps ($T_{RI}$) correspondants à un émetteur (2, 3, 4, 5).

2. Procédé selon la revendication 1,
   **caractérisé en ce que**,

pour l'attribution des parties de signal (16.i, 20.i, 22.i) à un émetteur (2, 3, 4, 5), on représente dans un diagramme pour chaque partie de signal (16.i, 20.i, 22.i) sa position relative dans le temps ($\tau_i$, $\tau_i$', $\tau_i$'') en fonction de son temps de démarrage ($T_{si}$, $T_{si}$', $T_{si}$'').

3. Procédé selon la revendication 1 ou 2,
**caractérisé en ce que**,
pour déterminer les parties de signal (16.i, 20.i, 22.i) formant l'ensemble de signal (6), on prédéfinit une longueur de signal (L) et on détermine les parties de signal (16.i, 20.i, 22.i) dont la longueur correspond à la longueur de signal (L) prédéfinie.

4. Procédé selon l'une quelconque des revendications 1 à 3,
**caractérisé en ce que**
on détermine un intervalle de temps ($\Delta T_s$) situé entre deux parties de signal (16.i, 16.i +1) successives.

5. Procédé selon l'une quelconque des revendications 1 à 4,
**caractérisé en ce que**
une vitesse relative d'un émetteur (5) est déterminée à partir d'une modification des positions relatives dans le temps ($\tau_i$'') des temps de démarrage ($T_{SI}$'') de parties de signal (22.i).

6. Procédé selon l'une quelconque des revendications 1 à 5,
**caractérisé en ce que**
un espacement ($\Delta r$) radial de différents émetteurs (2, 3) est déterminé à partir de la différence des positions relatives dans le temps ($\tau_i$, $\tau_i$') des instants de démarrage ($T_{SI}$, $T_{SI}$'') de parties de signal (16.i, 20.i) de différents signaux radiaux (15, 19).

7. Procédé selon l'une quelconque des revendications 1 à 6,
**caractérisé en ce que**
une puissance de signal est déterminée et représentée en supplément pour chaque partie de signal (16.i, 20.i, 22.i) représentée.

8. Procédé selon l'une quelconque des revendications 1 à 7,
**caractérisé en ce que**
on représente dans un diagramme pour chaque partie de signal (16.i, 20.i, 22.i) sa position relative dans le temps ($\tau_i$, $\tau_i$', $\tau_i$'') en fonction du temps de démarrage ($T_{SI}$, $T_{SI}$', $T_{SI}$'') et **en ce qu'**un sens de flèche est déterminé en supplément pour chaque partie de signal (16.i, 20.i, 22.i) représentée et est représenté en supplément.

9. Programme informatique avec des moyens à code de programme afin de pouvoir réaliser toutes les étapes selon l'une quelconque des revendications 1 à 8 lorsque le programme est exécuté sur un ordinateur ou un processeur de signaux numériques.

10. Programme informatique selon la revendication 9, lorsque le programme est mémorisé sur un support de données pouvant être lu à la machine.

11. Produit de programme informatique selon la revendication 9, le moyen à code de programme étant mémorisé sur un support de données pouvant être lu à la machine lorsque le programme est exécuté sur un ordinateur ou processeur de signaux numériques.

Fig. 1

Fig. 2

Fig. 3

Fig. 4

EP 1 699 151 B1